# FASCICULE DE BREVET EUROPEEN

(11) **EP 4 614 138 B1**
(45) Date de publication et mention de la délivrance du brevet: **21.10.2026**
(21) Numéro de dépôt: 25161301.4
(22) Date de dépôt: 03.03.2025
(51) Int. Cl.: G01N 23/2251, G01K 11/00, G06T 7/20

(54) **PROCÉDÉ ET DISPOSITIF DE TRAITEMENT DE DONNÉES MULTIDIMENSIONNELLES POUR CARTOGRAPHIER LES VIBRATIONS ATOMIQUES ET/OU LA TEMPÉRATURE ATOMIQUE**
VERFAHREN UND VORRICHTUNG ZUR VERARBEITUNG MEHRDIMENSIONALER DATEN ZUR ABBILDUNG VON ATOMAREN SCHWINGUNGEN UND/ODER ATOMARER TEMPERATUR
METHOD AND DEVICE FOR MULTIDIMENSIONAL DATA PROCESSING FOR MAPPING ATOMIC VIBRATION AND/OR ATOMIC TEMPERATURE

(30) Priorité: 04.03.2024 FR 2402157
(43) Date de publication de la demande: 10.09.2025
(73) Titulaire: Commissariat à l'Energie Atomique et aux Energies Alternatives, 75015 Paris (FR)
(72) Inventeur: GUEDJ, Cyril, 38054 GRENOBLE CEDEX 9 (FR)
(74) Mandataire: Lavoix

(56) Documents cités:
- HUSSAINI ZAHRA ET AL: "Determination of atomic positions from time resolved high resolution transmission electron microscopy images", ULTRAMICROSCOPY, vol. 186, 28 December 2017 (2017-12-28), NL, pages 139 - 145, XP093208279, ISSN: 0304-3991, DOI: 10.1016/j.ultramic.2017.12.018
- TABATA KOUDAI ET AL: "Direct Imaging of Atomic Rattling Motion in a Clathrate Compound", SMALL SCIENCE, vol. 4, no. 4, 17 February 2024 (2024-02-17), XP093208251, ISSN: 2688-4046, DOI: 10.1002/smsc.202300254
- CARDOCH SEBASTIAN: "Studying Atomic Vibrations by Transmission Electron Microscopy", 18 November 2016 (2016-11-18), pages 1 - 58, XP093208258, Retrieved from the Internet <URL:https://uu.diva-portal.org/smash/record.jsf?pid=diva2%3A1037517&dswid=3570> [retrieved on 20240924]

## Description

La présente invention concerne un procédé et un dispositif de traitement de données multidimensionnelles de microscopie pour la cartographie des vibrations atomiques et/ou de la température atomique dans un échantillon, comportant une acquisition d'au moins deux images formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux.

L'invention se situe dans le domaine du traitement de données multidimensionnelles, obtenues par observation d'échantillons composés d'un ou plusieurs matériaux, pour l'analyse de leurs propriétés physiques et de leurs structures.

Plus particulièrement, l'invention trouve des applications dans la caractérisation des phonons et dans la mesure de température locale dans les matériaux, par exemple appliquée dans l'inspection de qualité dans une chaîne de production de matériaux et dispositifs, en phase de calibration ou d'optimisation technologique de divers dispositifs utilisant les matériaux. Physiquement, un phonon correspond à une excitation collective dans un arrangement d'atomes constituant la structure. Au niveau d'un atome individuel, plus l'amplitude de vibration d'un atome autour de sa position d'équilibre est importante, plus sa température est élevée, donc la mesure de l'amplitude des vibrations atomiques permet de sonder localement la température.

La dualité ondes-particules stipulée par la mécanique quantique met en évidence l'importance fondamentale des vibrations et plus généralement des ondes afin de sonder les propriétés de la matière. Il est donc utile de disposer d'outils performants pour analyser les vibrations atomiques, et la spectroscopie vibratoire est classiquement utilisée en optique pour cartographier la nature des liaisons chimiques et la présence de défauts, par exemple par spectrométrie infrarouge, UV-visible ou spectrométrie Raman. En effet, les vibrations atomiques et moléculaires sont caractéristiques de l'agencement des liaisons atomiques et de la dynamique structurelle, qui traduisent précisément la signature d'un environnement chimiques local particulier. Par contre la résolution spatiale des méthodes optiques est limitée par la limite de diffraction, qui est particulièrement sévère dans la gamme usuelle comprise entre 10 à 100 microns de longueur d'onde. En dépit de nombreux efforts pour gagner en résolution spatiale, aucune technique optique ne permet aujourd'hui de cartographier les vibrations atomiques avec une résolution spatiale atomique.

L'analyse de propriétés physiques de matériaux par traitement de données de spectres (1D) et d'images (2D) obtenues par microscopie a été développée pour l'inspection des matériaux.

Les images et spectres sont par exemple obtenus par microscopie électronique en transmission à haute résolution (HRTEM et HRSTEM et 4D-STEM), microscopie de fluorescence X (HRSTEM-EDX), microscopie de perte d'énergie électronique (HRSTEM-EELS et HRSTEM-VEELS), microscopie électronique en transmission filtrée en énergie (EF-HRTEM, EF-HRSTEM), microscopie à force atomique (AFM), microscopie à effet tunnel (STM), sonde atomique tomographique ou tomographie électronique par exemple. Les images de microscopie obtenues sont des images à résolution atomique, c'est-à-dire de résolution spatiale inférieure ou égale à 2 nanomètres.

Des ensembles de données de spectres et d'images représentatives chacune d'au moins une partie de l'échantillon observé sont obtenues par microscopie, formant un pavé de données à N dimensions (ou données multidimensionnelles), également appelé « datacube », N étant un entier supérieur ou égal à 2. Ce pavé de données comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé, par exemple d'un alignement d'atomes le long de la direction d'observation. Le pavé de données acquis par microscopie peut également contenir du bruit.

Par exemple, s'agissant de l'observation de cristaux, des gouttes disposées selon un motif régulier représentent le maillage cristallin.

Le modèle atomique le plus simple est un modèle de sphère dure, qui représente la nature particulaire d'un atome. Les microscopes les plus performants permettent de visualiser les atomes, qui se présentent généralement sous l'image d'une goutte. En deux dimensions, les gouttes sont également appelées taches. En une dimension, les gouttes sont des points.

Mathématiquement, on définit une goutte comme étant une composante simplement connexe d'un espace topologique discret, au sens de la topologie générale. Cela signifie que tout lacet tracé dans une goutte peut être réduit par homotopie à un point. Physiquement, on définit une goutte comme le signal électrique produit par les pixels d'un détecteur matriciel suite à l'impact d'une particule (électron, photon, ion, fermions, boson, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Dans l'état de la technique, le panorama de la résolution spatiale des différentes spectroscopies vibratoires (EELS, NSOM, IXS, Raman, INS, FTIR) est résumé dans la publication « Imaging vibrational excitations in the electron microscope », V. Kumar, J. Camden, J. Phys. Chem. C 2022, 126, 16919-16927. La meilleure méthode actuelle de mesure des phonons et de la température des matériaux observés par microscopie est la technique de perte d'énergie des électrons (M. Lagos and P.E. Batson, « Thermometry with Subnanometer Resolution in the Electron Microscope Using the Principle of Detailed Balancing », Nano Lett. (2018), 7, 4556-4563), qui a été proposée pour cartographier les phonons et la température absolue avec une résolution spatiale subnanométrique (200 pm), avec une délocalisation inévitable sur plusieurs nanomètres. Un inconvénient potentiel de cette technique est l'acquisition des données potentiellement longue qui est susceptible d'endommager les matériaux les plus fragiles par effet de bombardement électronique. De plus, cette méthode n'a pas une résolution spatiale suffisante pour mesurer les vibrations atomiques d'un atome élémentaire dans l'échantillon avec une résolution spatiale <20 pm.

Z. Hussaini et al., dans leur article intitulé «Determination of atomic positions from time resolved high resolution transmission electron microscopy images», Ultramicroscopy 2017, 186, 139-145, DOI: 10.1016/j.ultramic.2017.12.018, XP093208279, décrivent une méthodologie permettant la mesure quantitative automatisée des fluctuations de position atomique en temps réel au sein d'une nanoparticule. Cette méthode repose sur la combinaison de plusieurs algorithmes de traitement d'images afin d'identifier avec précision les positions des colonnes atomiques dans chaque image. Un modèle géométrique est ensuite utilisé pour mesurer l'évolution dans le temps des distances et des angles entre les colonnes atomiques voisines, ce qui permet d'identifier différentes phases et de quantifier les fluctuations structurelles locales.

L'évolution des noeuds technologiques les plus avancés de l'ITRS (« International Technology Roadmap for Semiconductors ») engendre le besoin de localiser les vibrations atomiques et la température à une échelle de plus en plus petite, tout en préservant l'échantillon observé.

Il existe donc un besoin de mettre au point une méthode permettant de mesurer la température et les vibrations à l'échelle d'un atome unique.

A cet effet, l'invention propose, selon un aspect, un procédé de traitement de données multidimensionnelles de microscopie pour cartographier des vibrations atomiques et/ou une température atomique dans un échantillon d'au moins un matériau, comportant une acquisition d'au moins deux images dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce procédé comporte des étapes de :
a) acquisition d'une succession temporelle de pavés de données d'entrée,
b) pour chaque pavé de données d'entrée de ladite succession, pour au moins un pavé de données extrait dudit pavé de données d'entrée, dit pavé de composante, comportant des données homogènes selon un critère d'homogénéité relatif à au moins un matériau de l'échantillon observé, application d'une transformation de super-résolution audit pavé de composante pour obtenir un pavé, dit pavé de gouttes super-résolu, comportant des gouttes représentatives d'une structure atomique d'une partie de l'échantillon observé,
c) alignement temporel des pavés de gouttes super-résolus de ladite succession temporelle,
d) extraction de centroïdes à partir desdits pavés de gouttes obtenus après alignement temporel,
e) calcul d'une moyenne temporelle desdits centroïdes permettant d'obtenir une cartographie de température atomique et/ou projection de vecteurs de déplacement desdits centroïdes permettant d'obtenir une cartographie de vibrations atomiques.

Avantageusement le traitement appliqué permet de cartographier des vibrations atomiques et/ou une température atomique avec une résolution spatiale picométrique.

Le procédé de traitement de données multidimensionnelles de microscopie pour cartographier des vibrations atomiques et/ou une température atomique dans un échantillon d'au moins un matériau selon l'invention peut également présenter une ou plusieurs des caractéristiques ci-dessous, prises indépendamment ou selon toutes les combinaisons techniquement envisageables.

L'application de la transformation de super-résolution comporte une convolution par un filtre HBSG de noyau carré de taille inférieure ou égale à la médiane des distances entre gouttes voisines.

L'application d'une transformation de super-résolution comporte en outre une augmentation du nombre de points du pavé à N dimensions obtenu par ladite transformation de super-résolution.

L'application d'une transformation de super-résolution comporte en outre un autre application d'un filtre HBSG de noyau carré de taille inférieure ou égale à la médiane des distances entre gouttes voisines après augmentation du nombre de points et une étape de normalisation locale.

L'application d'une transformation de super-résolution pour obtenir un pavé de gouttes super-résolu comportant des gouttes représentatives d'une structure atomique d'une partie de l'échantillon observé met en œuvre une étape de segmentation utilisant un algorithme d'apprentissage machine, entraîné pour classifier les données du pavé de gouttes super-résolu en deux classes, respectivement une classe de « fond » et une classe de « gouttes » permettant d'obtenir un pavé de gouttes segmenté.

L'application d'une transformation de super-résolution pour obtenir un pavé de gouttes super-résolu comportant des gouttes représentatives d'une structure atomique d'une partie de l'échantillon observé met en œuvre en outre un filtrage spectral spécial appliqué sur le pavé de gouttes segmenté.

Le filtrage spectral spécial comporte une application d'une transformée de Fourier du pavé de gouttes segmenté pour obtenir un diffractogramme du pavé de gouttes, une application d'un masque de filtrage spectral spécifique sur ledit diffractogramme et une application d'une transformée de Fourier inverse.

Le procédé comporte un calcul dudit masque de filtrage spectral spécifique comportant : un calcul d'un diffractogramme théorique ajusté normalisé entre 0 et 1 et une segmentation par apprentissage machine du diffractogramme du pavé de gouttes permettant d'obtenir un diffractogramme du pavé de gouttes segmenté, puis une normalisation entre 0 et 1 du diffractogramme du pavé de gouttes segmenté, le masque de filtrage spectral spécifique étant formé à partir du maximum du diffractogramme théorique ajusté normalisé et dudit diffractogramme du pavé de gouttes segmenté normalisé.

Le procédé comporte en outre, après l'étape d'alignement temporel, une étape de super-résolution temporelle (82), comportant un calcul d'un ou plusieurs pavés de gouttes intermédiaires.

L'extraction de centroïdes à partir des pavés de gouttes obtenus après alignement temporel met en œuvre un calcul, pour chacun desdits pavés de gouttes, et pour chaque goutte du pavé de gouttes, d'un centroïde de ladite goutte, et un suivi d'une position temporelle des centroïdes entre pavés de gouttes successifs

L'invention concerne également un programme d'ordinateur comportant des instructions logicielles qui, lorsqu'elles sont exécutées par un ordinateur, mettent en œuvre un procédé de traitement de données multidimensionnelles de microscopie pour cartographier des vibrations atomiques et/ou une température atomique dans un échantillon d'au moins un matériau tel que défini ci-dessus.

L'invention concerne également un dispositif de traitement de données multidimensionnelles de microscopie pour cartographier des vibrations atomiques et/ou une température atomique dans un échantillon d'au moins un matériau, mettant en œuvre une acquisition d'au moins deux images dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce dispositif comporte :
- un module d'obtention d'une succession temporelle de pavés de données d'entrée,
- pour chaque pavé de données d'entrée de ladite succession, pour au moins un pavé de données extrait dudit pavé de données d'entrée, dit pavé de composante, comportant des données homogènes selon un critère d'homogénéité relatif à au moins un matériau de l'échantillon observé, un module de transformation de super-résolution appliquée pavé de composante pour obtenir un pavé, dit pavé de gouttes super-résolu, comportant des gouttes représentatives d'une structure atomique d'une partie de l'échantillon observé,

- un module d'alignement temporel des pavés de gouttes super-résolus de ladite succession temporelle,
- un module extraction de centroïdes à partir desdits pavés de gouttes obtenus après alignement temporel,
- un module de calcul d'une moyenne temporelle desdits centroïdes permettant d'obtenir une cartographie de température atomique et/ou un module de projection de vecteurs de déplacement desdits centroïdes permettant d'obtenir une cartographie de vibrations atomiques.

L'invention apparaîtra plus clairement à la lecture de la description qui va suivre, donnée uniquement à titre d'exemple non limitatif, et faite en référence aux dessins dans lesquels :
[Fig. 1] la figure 1 est un schéma-bloc d'un système pour cartographier des vibrations atomiques et/ou une température atomique dans un échantillon comportant un dispositif de traitement de données multidimensionnelles de microscopie selon un mode de réalisation ;
[Fig 2] la figure 2 est un synoptique d'un procédé de traitement de données multidimensionnelles de microscopie selon un mode de réalisation ;
[Fig 3] la figure 3 est un synoptique des étapes d'une transformation de super-résolution selon un mode de réalisation ;
[Fig 4] la figure 4 est un synoptique des étapes d'un filtrage spectral spécifique selon un mode de réalisation ;
[Fig 5] la figure 5 est un exemple en deux dimensions d'un pavé de données d'entrée et de pavé super-résolu correspondant obtenu par application d'une transformation de super-résolution ;
[Fig 6] la figure 6 illustre un exemple en deux dimensions de positionnement des centroïdes ;
[Fig 7] la figure 7 représente un exemple de moyenne temporelle d'une goutte avec la trace de tous ses déplacements intégrée sur la période d'acquisition des données.

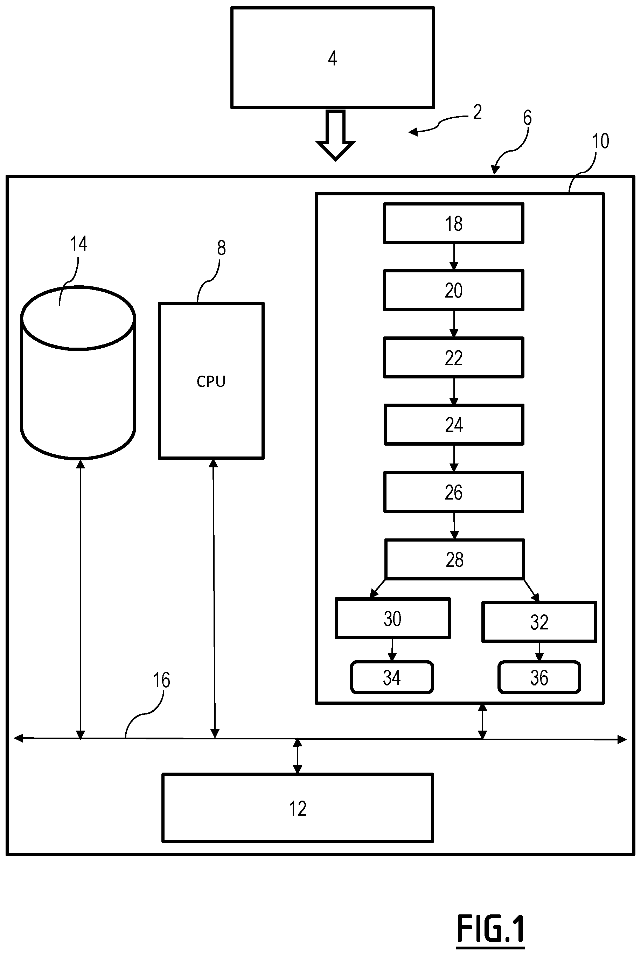

**La** **figure 1** illustre schématiquement un système 2 pour cartographier des vibrations atomiques et/ou une température atomique dans un échantillon d'un ou plusieurs matériaux à partir de données multidimensionnelles représentatives de l'échantillon, acquises par une machine de caractérisation 4.

Toute technique de microscopie adaptée pour la caractérisation d'un tel échantillon est applicable.

Dans un mode de réalisation, la machine de caractérisation 4 est un microscope électronique en transmission (TEM) qui permet d'acquérir des images d'un échantillon composé d'un ou plusieurs matériaux, comportant par exemple des matériaux cristallins.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Dans un autre mode de réalisation, la machine de caractérisation 4 est un microscope à sonde tel que le microscope à force atomique ou le microscope à effet tunnel ou les autres variantes telles que le microscope à sonde de Kelvin par exemple, dans un mode de mesure permettant d'obtenir des images de résolution spatiale atomique.

Chaque spectre ou image acquis est représenté sous forme d'image numérique, comportant des points ou pixels, chaque image étant représentative d'au moins une partie de l'échantillon observé.

L'ensemble des spectres et images acquis forme un pavé de données à N dimensions, N étant un entier naturel supérieur ou égal à 2. Un tel pavé de données est également appelé « datacube ».

Pour obtenir la trace des mouvements atomiques, plusieurs spectres ou images sont acquis dans le temps, sur une période d'acquisition de données, montrant une évolution de l'échantillon lors de l'analyse. Le temps est donc une dimension du pavé de données, qui permet d'analyser l'évolution temporelle du matériau, c'est-à-dire sa dynamique.

En complément facultatif, une autre dimension du pavé de données est la focalisation du microscope, l'énergie des électrons, un angle (de l'échantillon, de collection des électrons, de convergence de électrons), ou tout autre paramètre de réglage du microscope susceptible de varier de manière contrôlée durant la mesure.

Les données incomplètes peuvent éventuellement être extrapolées à partir des valeurs voisines le cas échéant, par exemple pour corriger les éventuelles imperfections rencontrés durant l'acquisition de données. En règle générale les mesures à l'échelle atomique sont très souvent entachées de défauts car un simple bruit acoustique ou électronique peut parfois les perturber.

Dans un pavé de données multidimensionnelles d'un échantillon cristallin, la maille forme usuellement un réseau régulier de gouttes représentatives de l'agencement des atomes. Les simulations permettent de prédire quels seront les pavés N-dimensionnels (ou datacubes) attendus pour un matériau donné et pour un réglage particulier du microscope.

Comme déjà indiqué ci-dessus, mathématiquement, une goutte est une composante simplement connexe d'un espace topologique discret, au sens de la topologie générale.

Les valeurs des pixels appartenant à une goutte se distinguent d'un fond d'image. Ce fond est défini par une intensité ramenée à zéro après segmentation.

Un pavé de données multidimensionnelles d'un échantillon observé est transmis à un dispositif 6 de traitement de données multidimensionnelles de microscopie pour cartographier des vibrations atomiques et/ou une température atomique dans un échantillon.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 (CPU ou GPU) associé à une mémoire électronique 10. Optionnellement, le dispositif 6 comporte une interface homme-machine 12, comportant notamment un écran d'affichage de données. En outre le dispositif 6 comporte ou est connecté à une mémoire de stockage 14. Les éléments 8, 10, 12, 14 du dispositif 6 sont adaptés pour communiquer via un bus de communication 16.

Le processeur 8 (CPU ou GPU) est configuré pour exécuter des modules 18, 20, 22, 24, 26, 28, 30 et 32 mémorisés dans la mémoire électronique 10, pour mettre en œuvre un procédé de traitement de données multidimensionnelles représentatives de l'échantillon observé pour cartographier des vibrations atomiques et/ou une température atomique dans l'échantillon.

Le module 18 est un module d'obtention de pavé de données multidimensionnelles à traiter, configuré pour obtenir un pavé de données comportant au moins deux images d'entrée, et par exemple une pluralité d'images d'entrée sur une période d'acquisition de données, à partir d'un pavé de données obtenu par la machine de caractérisation 4.

Par exemple, le module d'obtention 18 est configuré pour obtenir les pavés de données à traiter (ou pavé de données d'entrée) à partir d'une mémoire électronique, où ces données ont été mémorisées après acquisition.

Le module 20 est un module de partitionnement qui découpe le pavé de données en plusieurs pavés (ou sous-pavés) comportant chacun des données homogènes selon un critère d'homogénéité choisi.

Le module 22 est un module de transformation de super-résolution spatiale du pavé d'entrée en pavé de gouttes représentatives de la structure atomique de l'échantillon observé.

Le module 24 est un module d'alignement temporel, mettant en œuvre une correction d'éventuelles dérivés spatiales de l'échantillon lors de l'acquisition.

Le module 26 est un module de super-résolution temporelle, configuré pour augmenter la résolution temporelle. Le module de super-résolution temporelle 26 est mis en œuvre optionnellement.

Le module 28 d'extraction des centroïdes met en œuvre une extraction des centroïdes des gouttes, permettant de détecter d'éventuels déplacement par rapport à une position moyenne d'équilibre.

Le module 30 de calcul de température atomique met en œuvre un calcul de moyenne temporelle des centroïdes, permettant d'obtenir une cartographie 34 de température atomique.

Le module 32 de calcul d'une cartographie 36 de vibrations atomiques met en œuvre une projection de vecteurs de déplacement, comme décrit plus en détail ci-après.

Dans un mode de réalisation, les modules les modules d'obtention 18 de pavé de données multidimensionnelles, de partitionnement 20, de transformation de super-résolution spatiale 22, d'alignement temporel 24, de super-résolution temporelle 26, d'extraction de centroïdes 28, de calcul de température atomique 30 et de calcul 32 d'une cartographie de vibrations atomiques sont réalisés chacun sous forme d'un logiciel, et forment un programme d'ordinateur, comportant des instructions logicielles qui, lorsqu'elles sont exécutées par un ordinateur, mettent en œuvre un procédé de traitement de données multidimensionnelles de microscopie pour cartographier des vibrations atomiques et/ou une température atomique dans un échantillon d'au moins un matériau tel que décrit plus en détail ci-après.

En variante non représentée, les modules d'obtention 18 de pavé de données multidimensionnelles, de partitionnement 20, de transformation de super-résolution spatiale 22, d'alignement temporel 24, de super-résolution temporelle 26, d'extraction de centroïdes 28, de calcul de température atomique 30 et de calcul 32 d'une cartographie de vibrations atomiques sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*). Les variantes incluent évidemment les évolutions connues par l'homme du métier dans le domaine de l'informatique et plus généralement du traitement automatisé des informations.

Le logiciel de traitement de traitement de données multidimensionnelles de microscopie pour cartographier des vibrations atomiques et/ou une température atomique dans un échantillon d'au moins un matériau est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire nonvolatile (par exemple EPROM, EEPROM, FLASH, NVRAM, RRAM, PCRAM, NAND 2D, NAND 3D, SLC NAND, MLC NAND, TLC NAND, V-NAND, QLC), une carte magnétique ou une carte optique, un disque SSD, et toute variante connues par l'homme du métier dans le domaine du stockage numérique des données.

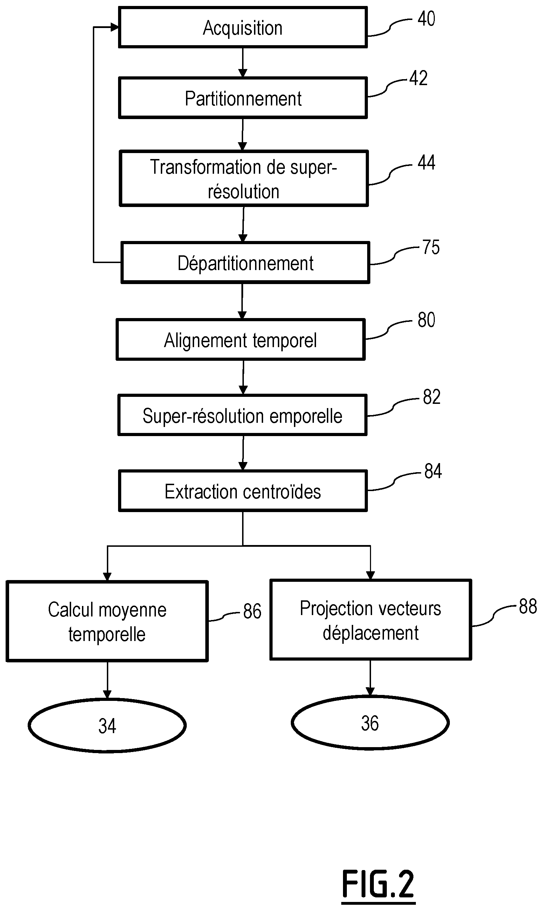

Un mode de réalisation du procédé de traitement de données multidimensionnelles de microscopie pour cartographier des vibrations atomiques et/ou une température atomique dans un échantillon d'au moins un matériau sera décrit ci-dessous en référence aux figures 2, 3 et 4.

La **figure 2** est un synoptique des principales étapes d'un procédé de traitement de données multidimensionnelles de microscopie pour cartographier des vibrations atomiques et/ou une température dans un échantillon d'au moins un matériau.

Le procédé comprend une étape 40 d'obtention (ou acquisition) d'un pavé de données d'entrée à traiter, comportant au moins une image, représentant l'échantillon à inspecter.

L'étape 40 est répétée de manière à acquérir une succession temporelle de pavés de données d'entrée à traiter sur une période d'acquisition de données choisie.

Le pavé de données comporte des gouttes se détachant d'un fond homogène, par exemple des gouttes claires sur fond sombre en microscopie HRSTEM-HAADF, ou HRTEM éventuellement filtré en énergie, représentatives de la structure atomique de l'échantillon observé. Le lien entre la position des atomes et la position des gouttes est obtenu par des simulations qui tiennent compte notamment des réglages du microscope.

D'une manière générale, le pavé de données d'entrée est un pavé à N dimensions, N supérieur ou égal à 2.

Les données du pavé sont des valeurs numériques, chaque valeur étant associée à un point dans l'espace à N dimensions. Un tel point est également appelé pixel lorsque N=2. Chaque point a une coordonnée associée dans chaque dimension, en général représentée par un indice.

Dans un mode de réalisation, N=2, le pavé de données d'entrée étant alors une matrice LxW (i.e. L lignes et W colonnes), composée de valeurs de pixels, chaque pixel ayant des coordonnées respectives (x,y), x étant par exemple un indice de ligne et y un indice de colonne.

Optionnellement, si le matériau n'est pas homogène, l'étape 42 de partitionnement spatial ou découpage du pavé de données d'entrée en sous-pavés de données d'entrée est mise en œuvre.

Par définition, chaque sous-pavé de données d'entrée est un espace connexe discret au sens de la topologie générale et comporte des données homogènes selon un critère relatif à au moins un matériau de l'échantillon observé.

Le critère d'homogénéité est une homogénéité de structure, en référence à l'agencement des atomes dans un matériau donné. Le découpage de partitionnement est par exemple effectué par apprentissage machine, par exemple par segmentation supervisée, semi supervisée ou par classification autonome après apprentissage (par exemple profond). Classiquement, la structure est par exemple quantifiée par l'intermédiaire du diffractogramme numérique. Un sous-pavé de gouttes est désigné comme représentatif de la structure s'il contient un nombre de gouttes supérieur à 3 à la puissance n, où n représente la dimension du pavé. Par exemple, pour une image n=2 et un sous-pavé est considéré comme représentatif de la structure locale s'il contient au minimum 9 gouttes voisines.

L'homogénéité structurale est obtenue quand les diffractogrammes numériques de tous les sous-pavés de gouttes représentatifs sont similaires, c'est-à-dire quand leurs distances relatives sont inférieures à un seuil choisi. Dans la littérature, il existe de nombreuses méthodes de quantification de la similarité qui peuvent servir à quantifier l'homogénéité structurale par l'intermédiaire de la similarité des transformées de Fourier. La transformée de Fourier donne une image de l'ordre structurel, similaire à l'ordre cristallin révélé par un cliché de diffraction électronique. Selon des variantes, le critère d'homogénéité est un critère d'homogénéité de valeurs d'intensité des données et/ou de permittivité diélectrique et/ou de propriétés électromagnétiques, par exemple mesurées *in-situ* durant l'acquisition du pavé de données. Les mesures VEELS permettent notamment d'obtenir la permittivité diélectrique locale, comme le montre la littérature. Ce critère d'homogénéité structurale ou de propriétés physiques permet donc de réaliser ce partitionnement du pavé de données d'entrée en zones d'intérêt qui sont des sous-pavés de données d'entrée homogènes.

L'étape 42 est suivie d'une étape 44 de transformation dite de transformation de super-résolution dudit pavé de données d'entrée pour obtenir un pavé de gouttes dit pavé de gouttes super-résolu, comportant des gouttes représentatives d'une structure atomique d'une partie de l'échantillon observé ou de l'échantillon observé.

L'étape 44 de transformation de super-résolution est réaliser sur le pavé de données d'entrée homogènes ou sur chaque sous-pavé de données d'entrée homogènes.

Lorsque plusieurs sous-pavés de données d'entrée homogènes ont été obtenus à l'issue de l'étape 42, l'étape 44 est suivie d'une étape 75 de départitionnement ou réassemblage spatial, consistant à réunir les sous-pavés de gouttes super-résolus en un pavé de gouttes super-résolu représentatif de l'échantillon.

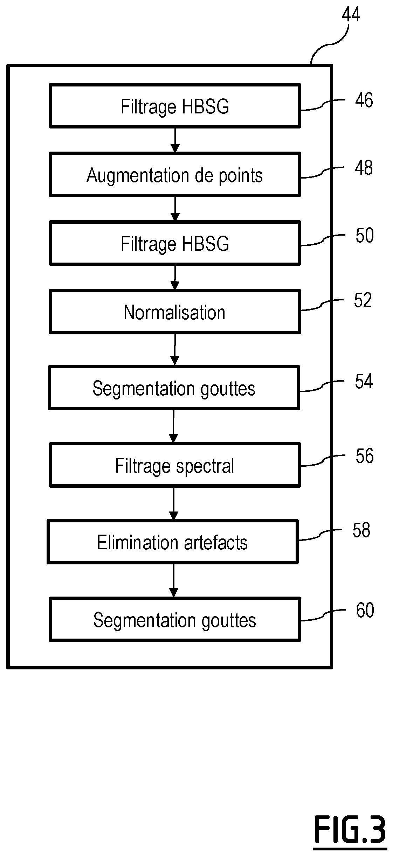

Un mode de réalisation de l'étape 44 de transformation de super-résolution est décrit en référence à la **figure 3****.**

L'étape 44 met en œuvre un met en œuvre un filtrage par convolution (étape 46) avec un noyau HBSG (pour « Half Ball Savitzky-Golay ») tel que décrit dans la demande de brevet FR3 118 256 (« FILTRE DE TRAITEMENT D'IMAGE POUR LA LOCALISATION DE GOUTTES DANS UNE IMAGE MULTIDIMENSIONNELLE ET PROCÉDÉ DE TRAITEMENT D'IMAGE ASSOCIÉ »). Ce filtrage par exemple utilise un noyau HBSG carré de taille correspondant à la médiane des distances entre gouttes voisines (par exemple 21 pixels), avec un lissage d'ordre 2 ou 3. Plus ce noyau est petit, plus il conserve les détails les plus fins, donc la taille est choisie pour s'adapter à la finesse des détails recherchés. En contrepartie une taille trop petite élimine moins de bruit.

L'étape 46 de filtrage par convolution est suivie d'une étape optionnelle 48 d'augmentation du nombre de points (ou de pixels).

Dans un mode de réalisation l'étape 48 met en œuvre une interpolation, à l'aide d'une technique de reconstruction ou d'une technique de super-résolution telle que la méthode de variation totale, appelée « total variation » (TV) en anglais. Cette méthode consiste à réguler la création des nouveaux points sur la variation totale des contrastes de l'image originale. Cette approche permet de conserver les variations globales de contraste tout en préservant les bords des gouttes de l'image. La méthode de variation totale est notamment décrite dans la publication L. I. Rudin, S. Osher, and E. Fatemi, « Nonlinear total variation based noise removal algorithms », Physica D, 60 (1), 259-268 (1992).

L'étape optionnelle 48 d'augmentation du nombre de points est suivie d'un deuxième filtrage par convolution 50, identique au filtrage par convolution 46 avec un noyau HBSG, avec l'objectif de corriger d'éventuels artéfacts introduits par l'étape 48 d'augmentation du nombre de points.

Optionnellement, l'étape 44 comprend également une étape 52 de normalisation locale consistant à diviser les valeurs du pavé de données traité par la variance locale, obtenue en calculant la racine carrée de la convolution par un filtre gaussien du carré des valeurs du pavé de données traité. De préférence, la dimension du filtre gaussien utilisé pour calculer la variance locale représente la moitié de la médiane des distances entre gouttes voisines.

L'étape 44 de transformation de super-résolution comporte ensuite une étape 54 de segmentation des gouttes super-résolues, afin de remplacer le voisinage des gouttes par un fond uniformément noir.

Selon une première variante, la segmentation 54 met en œuvre un seuillage adaptatif de Bernsen, connu dans le domaine du traitement des images, avec un rayon proche de la moitié de la médiane des distances entre gouttes voisines (par exemple 10 pixels).

Selon une deuxième variante, la segmentation 54 met en œuvre un apprentissage machine comme décrit plus en détail ci-après. L'algorithme d'apprentissage machine permet de distinguer deux classes, respectivement la classe de « gouttes » (ou « spots » en anglais) et la classe de « fond ».

Par exemple, l'apprentissage machine est effectué avec un algorithme de type forêt aléatoire rapide « Fast random forest », décrit dans l'article de Leo Breiman (2001). « Random Forests », publié dans Machine Learning. 45(1):5-32.

En variante, d'autres algorithmes de classification par apprentissage machine peuvent être mis en œuvre, par exemple de type Bayesien, ou à base de fonctions, ou à base de règles, ou une combinaison de tels algorithmes, ou à base de toute la palette d'outils utilisés en classification par apprentissage machine tels que l'apprentissage profond (en anglais « deep learning ») par exemple. L'apprentissage machine est réalisé avec des régions d'apprentissage exemptes de trous car l'objectif consiste à s'approcher de la forme théorique de goutte idéale, par définition exempte de trous.

En règle générale, les gouttes représentent moins de 20 % de l'image, et leur taille est inférieure à 1 nm, après calibration sur les tailles réelles dans l'échantillon. Les simulations des images théoriques permettent de déterminer quelle est la distribution attendue des gouttes dans l'image afin de vérifier que la segmentation est correcte. Une segmentation est correcte si le nombre et la position des gouttes s'approche des valeurs théoriques attendues au-delà d'un seuil d'incertitude donné.

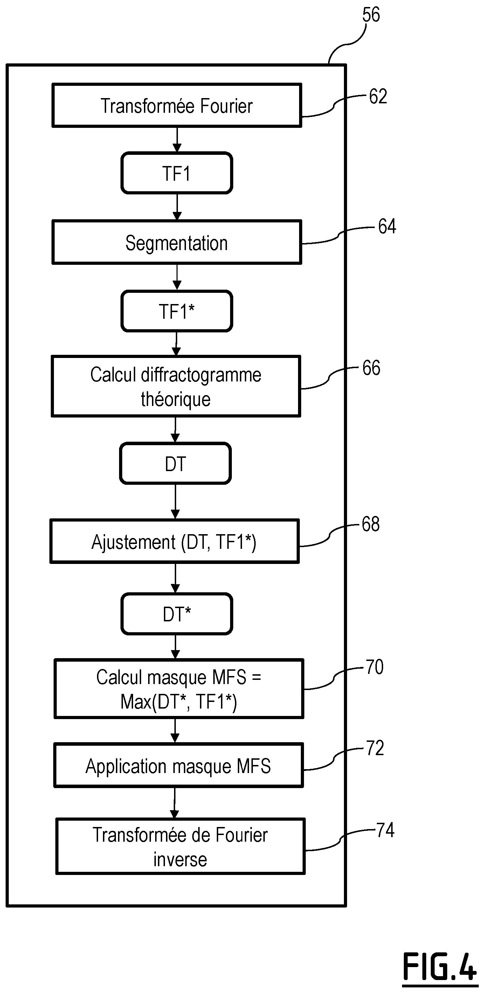

L'étape 44 de transformation de super-résolution comporte ensuite une étape 56 de filtrage spectral, qui met en œuvre un masque de filtrage spectral spécifique dont la construction sera décrite ci-après en référence à la figure 4. Le filtrage spectral 56 met en œuvre une transformée de Fourier, des étapes de traitement décrites ci-après et une transformée de Fourier inverse.

L'étape 56 de filtrage spectral est suivie optionnellement d'une étape 58 d'élimination d'artéfacts consistant à éliminer toutes les zones qui présentent des imperfections résiduelles, notamment les bords de l'image. En effet, les transformées de Fourier génèrent toujours des artéfacts au pourtour du pavé de données qu'il convient donc de masquer. C'est la simulation atomistique des images théoriques parfaites qui permet de déterminer précisément quelles sont les régions du pavé de données qui présentent de telles aberrations numériques locales qu'il convient d'éliminer par masquage sélectif.

Enfin, l'étape 44 de transformation de super-résolution comporte une étape 60 de segmentation de gouttes, afin d'obtenir des gouttes qui se détachent sur fond homogène, par exemple fond noir, totalement exempt de bruit. Par exemple, l'étape 60 met en œuvre une segmentation analogue à la segmentation 54 décrite ci-dessus.

Comme illustré en référence à la **figure 4****,** dans un mode de réalisation l'étape 56 de filtrage spectral met en œuvre d'abord une transformée de Fourier appliquée à l'étape 62 sur le pavé de gouttes issu de l'étape de segmentation 54.

L'expression « transformée de type Fourier » désigne la transformée de Fourier et toutes ses variantes et généralisations aux hyperespaces, notamment la transformée de Hartley, la transformée de Hartley discrète (DHT), la transformée de Fourier rapide, la transformée de Fourier discrète, la transformée de Fourier discrète généralisée, la transformée de Fourier à court terme ou « short-time Fourier transform » ou « short-term Fourier transform » (STFT) en anglais, la transformée de Fourier fractionnaire ou «Fractional Fourier transform » (FRFT) en anglais, la transformée de Chirplet, la transformée de Hankel, la transformée de Fourier-Bros-Lagolnitzer, la transformée linéaire canonique, les transformées de type discrete-time Fourier transform (DTFT), la transformée de Fourier à espace discret ou « discrete-space Fourier transform » (DSFT) en anglais, la transformée en Z, la transformée en cosinus discrète modifiée ou « modified discrete cosine transform » (MDCT) en anglais, et la transformée de Fourier de groupes finis.

A l'issue de l'étape 62 d'application de la transformée de Fourier est obtenu un pavé spectral TF1, qui est un diffractogramme du pavé de gouttes après segmentation 54.

Le procédé comporte alors une étape 64 de segmentation du pavé spectral TF1 pour obtenir un pavé spectral (ou diffractogramme) segmenté TF1*.

Par exemple, l'étape 64 de segmentation met en œuvre une méthode de segmentation par apprentissage machine similaire à l'étape 54 qui permet de distinguer deux classes, respectivement la classe de « gouttes » (ou « spots » en anglais) et la classe de « fond ».

Par exemple, l'apprentissage machine est effectué avec un algorithme de type forêt aléatoire rapide « Fast random forest », décrit dans l'article de Leo Breiman (2001). « Random Forests », publié dans Machine Learning. 45(1):5-32.

Le procédé comprend également un calcul 66 de diffractogramme théorique DT ajusté sur le diffractogramme segmenté TF1* du pavé de gouttes.

Deux cas de figure sont à envisager.

Dans un premier cas de figure, la nature du matériau de l'échantillon et sa structure sont connues. Dans ce premier cas de figure, le diffractogramme théorique DT est également connu, et il suffit de pratiquer de légères distorsions par transformation affine pour le superposer au diffractogramme segmenté TF1*.

Dans un deuxième cas de figure, la nature du matériau de l'échantillon et sa structure ne sont pas connues. Dans ce deuxième cas de figure, le diffractogramme théorique est calculé à partir du diffractogramme segmenté TF1* : des pics périodiques sont détectés dans le diffractogramme segmenté TF1* et la périodicité observée est prolongée dans toutes les directions pour remplir le pavé N-dimensionnel jusqu'aux bords. On obtient alors un diffractogramme théorique DT extrapolé sur les gouttes existantes.

Le procédé comprend alors une étape d'ajustement 68, consistant à effectuer un ajustement du diffractogramme théorique DT en fonction du diffractogramme ou pavé spectral segmenté TF1* calculé à l'étape 64. L'ajustement 68 de la théorie par rapport à l'expérience consiste à varier les paramètres théoriques de longueurs (a,b,c) et d'angles (α,β,γ) définissant la maille du cristal afin de minimiser l'écart quadratique moyen entre le diffractogramme segmenté expérimental TF1* et le diffractogramme théorique DT. Un diffractogramme théorique ajusté, DT*, est alors obtenu.

Le procédé comporte ensuite une étape 70 de calcul d'un masque de filtrage spectral spécifique MFS. L'étape de calcul 70 comporte une normalisation entre 0 et 1 du diffractogramme théorique ajusté DT* et expérimental TF1*, et ensuite une combinaison de ces diffractogrammes, le masque de filtrage spectral spécifique MFS étant formé à partir du maximum du diffractogramme théorique ajusté DT* normalisé entre 0 et 1 et du diffractogramme segmenté expérimental TF1* normalisé entre 0 et 1.

Le masque de filtrage spectral spécifique MFS ainsi obtenu est appliqué à l'étape 72 sur la transformée de Fourier des gouttes segmentées obtenues après l'étape 54.

Mathématiquement, l'application du masque comporte la multiplication de chaque terme de la transformée de Fourier des gouttes segmentées obtenues après l'étape 54 par son homologue dans le masque de filtrage spectral MFS, pour garder uniquement les informations spectrales contenues dans les régions non nulles de MFS. Ce filtrage conserve donc uniquement les fréquences sélectionnées par MFS. Ensuite une binarisation optionnelle permet d'améliorer le contraste du diffractogramme et de réduire la taille. Les données en 32 bits ou 64 bits sont alors converties en données 8 bits plus simples à manipuler dans le cas de très gros volumes de données.

Le procédé comporte ensuite une application 74 de la transformée de Fourier inverse, permettant alors d'obtenir un pavé de gouttes filtré dans le domaine spatial après correction par filtrage spectral.

De retour à la figure 2, l'étape de transformation de super-résolution 44 est suivie d'une étape de départitionnement 75 déjà évoquée.

Les étapes 40 à 75 sont répétées pour une pluralités d'acquisitions de pavés de données, de manière à former une séquence temporelle de pavés de gouttes filtrés, qui sont mémorisés dans une mémoire électronique du dispositif de traitement.

Le procédé comporte ensuite une étape 80 d'alignement temporel. Cette étape d'alignement temporel 80 met en œuvre un réalignement (ou registration) de série temporelle également appelé « correction de dérive ». Par exemple, le logiciel NanoJ décrit dans « NanoJ : a high-performance open-source super-resolution microscopy toolbox », de Romain F. Laine et al, publié dans Journal of Physics D : Applied Physics ; 52, 2019 est mis en œuvre.

Le procédé comporte ensuite optionnellement une étape 82 de super-résolution temporelle, consistant à augmenter si besoin la résolution temporelle en calculant des pavés de gouttes (par exemple des images lorsque N=2 ou 3) intermédiaires. L'étape 82 met en œuvre tout algorithme classique connu, par exemple une interpolation bilinéaire, bicubique ou avec des B-splines ; soit une méthode basée sur l'intelligence artificielle générative ou toute une autre variante classique ou d'IA connue par l'homme du métier.

Le procédé comporte ensuite une étape 84 d'extraction de centroïdes des gouttes, à partir de chaque image de gouttes traitée.

Le centroïde est classiquement le centre de gravité d'une goutte. Une seule image suffit donc pour déterminer le centroïde de chaque goutte de cette image.

Il est à noter que chaque goutte représente un atome ou un alignement d'atomes, donc le procédé proposé peut avoir une résolution allant jusqu'à l'atome individuel.

L'étape 84 permet de trouver automatiquement le centre de gravité des gouttes, ce qui permettra par la suite de caractériser les vibrations temporelles des gouttes.

Par exemple, l'étape 84 met en œuvre une méthode de suivi de la position temporelle des centroïdes entre pavés de gouttes successifs, qui est dans un mode de réalisation une méthode de suivi de particules, par exemple décrite dans la publication N. Chenouard et al., « Objective comparison of particle tracking methods », Nature Methods, 11 (3), 281-289 (2014).

Le procédé comporte alors une étape 86 de calcul de moyenne temporelle et/ou une étape 88 de projection de vecteurs de déplacement.

L'étape 86 de calcul de moyenne temporelle des centroïdes réalise un calcul d'un écart moyen par rapport à la position d'équilibre, sur une succession temporelle de pavés de gouttes, sur la période d'acquisition de données. L'écart moyen de position est lié de manière biunivoque à la température de la goutte, ainsi l'étape 86 permet d'obtenir une cartographie 34 de température atomique. Plus la trace des positions successives est étalée dans l'espace, plus la température est élevée.

L'étape 88 de projection de vecteurs de déplacement réalise une projection de vecteurs de déplacement entre centroïdes associés à une même goutte entre des pavés de gouttes successifs, pour chaque pas temporel . Si Mᵢ est la position du centroïde au temps i, alors le vecteur déplacement est le vecteur MᵢMᵢ₊₁ L'étape 88 de projection de vecteurs de déplacement est donc simplement la somme de tous les vecteurs MᵢMᵢ₊₁ quand les indices i balayent toutes les étapes d'acquisition temporelle, depuis la première image (i=1) jusqu'à la dernière image (i=imax).

Selon les modes de réalisation, les étapes 86 et 88 sont toutes deux mises en oeuvre, ou bien l'une ou l'autre des étapes est mise en oeuvre pour obtenir soit la cartographie 34 de température atomique, soit la cartographie 36 de vibrations atomiques.

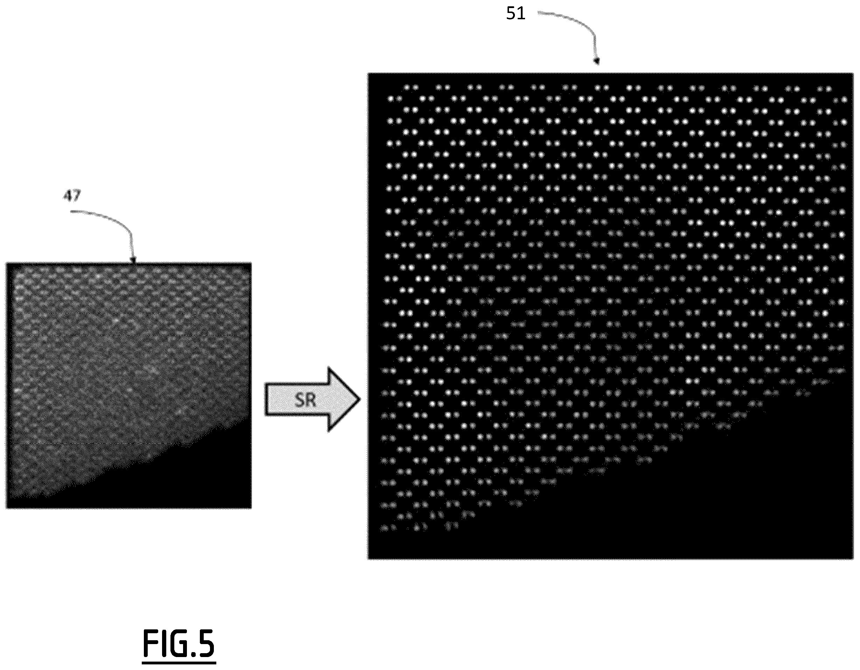

La **figure 5** illustre, en dimension N=2, un pavé de données homogène 47 en silicium et un pavé de gouttes 51 correspondant obtenu à l'issue du l'étape 44 de transformation de super-résolution.

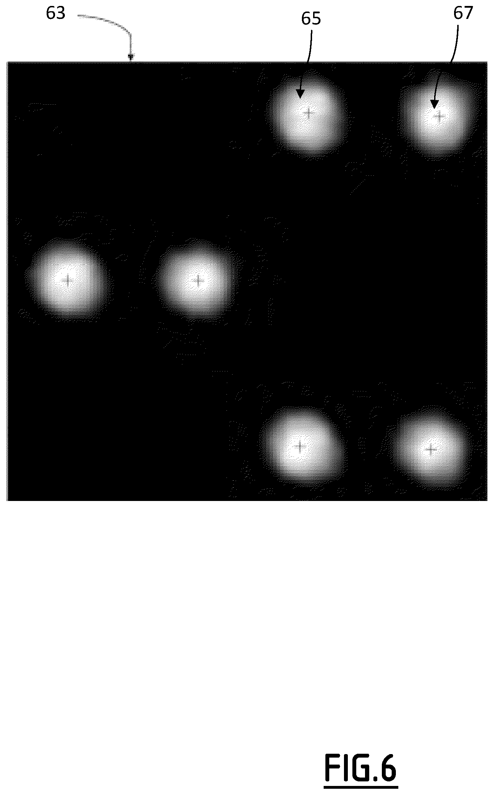

La **figure 6** représente, en dimension N=2, une portion de pavé de gouttes 63, telle qu'obtenue à l'issue de l'étape 84 d'extraction de centroïdes, comportant des gouttes 65 segmentées et des centroïdes 67 respectifs, chaque centroïde étant indiqué par un '+'.

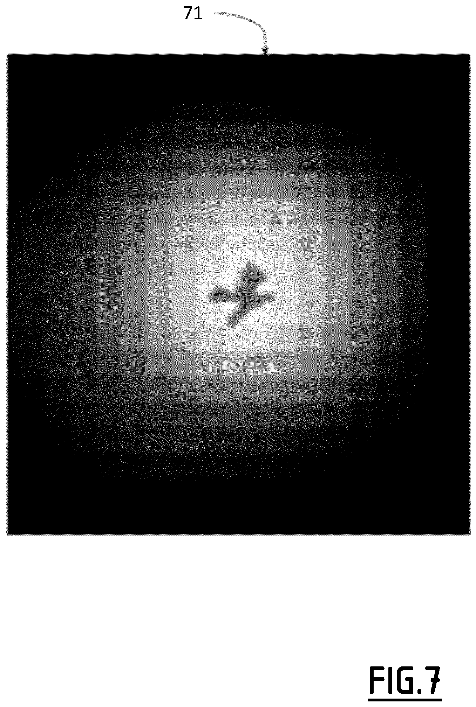

La **figure 7** représente dans une image 71 la moyenne temporelle des gouttes avec au centre la trace de ses mouvements au cours du temps. L'évolution temporelle de la position des centroïdes fournit une mesure des vibrations atomiques (phonons) projetés sur la direction d'observation.

Avantageusement, le procédé proposé permet de mesurer l'amplitude et la direction des vibrations atomiques, afin par exemple de sonder la présence d'éventuels défauts, et trouve également des applications dans le domaine de la plasmonique et des dispositifs quantiques, par exemple utilisés dans les ordinateurs quantiques. En effet, dans ce type de dispositifs, les effets physiques obtenus sont généralement liés à des espèces de taille subnanométrique. La picothermométrie trouve également des applications importantes dans les domaines tels que la catalyse, l'énergie, les dispositifs électroniques les plus avancés ou la nanophotonique par exemple.

## Revendications

1. Procédé mis en œuvre par ordinateur de traitement de données multidimensionnelles de microscopie pour cartographier des vibrations atomiques et/ou une température atomique dans un échantillon d'au moins un matériau, comportant une acquisition d'au moins deux images dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le procédé étant **caractérisé en ce qu'**il comporte des étapes de :
a) acquisition (40) d'une succession temporelle de pavés de données d'entrée,
b) pour chaque pavé de données d'entrée de ladite succession, pour au moins un pavé de données extrait dudit pavé de données d'entrée, dit pavé de composante, comportant des données homogènes selon un critère d'homogénéité relatif à au moins un matériau de l'échantillon observé, application (44) d'une transformation de super-résolution audit pavé de composante pour obtenir un pavé, dit pavé de gouttes super-résolu, comportant des gouttes représentatives d'une structure atomique d'une partie de l'échantillon observé,
c) alignement temporel (80) des pavés de gouttes super-résolus de ladite succession temporelle,
d) extraction de centroïdes (84) à partir desdits pavés de gouttes obtenus après alignement temporel,
e) calcul d'une moyenne temporelle (86) desdits centroïdes permettant d'obtenir une cartographie de température atomique et/ou projection (88) de vecteurs de déplacement desdits centroïdes permettant d'obtenir une cartographie de vibrations atomiques.

2. Procédé selon la revendication 1, dans lequel l'application (44) de la transformation de super-résolution (44) comporte une convolution (46) par un filtre Half-Ball Savitzky-Golay (HBSG) de noyau carré de taille inférieure ou égale à la médiane des distances entre gouttes voisines.

3. Procédé selon la revendication 2, dans lequel l'application d'une transformation de super-résolution (44) comporte en outre une augmentation (48) du nombre de points du pavé à N dimensions obtenu par ladite transformation de super-résolution.

4. Procédé selon la revendication 3, dans lequel l'application d'une transformation de super-résolution (44) comporte en outre un autre application d'un filtre HBSG de noyau carré de taille inférieure ou égale à la médiane des distances entre gouttes voisines après augmentation (48) du nombre de points et une étape de normalisation locale (52).

5. Procédé selon l'une quelconque des revendications 1 à 4, dans lequel l'application d'une transformation (44) de super-résolution pour obtenir un pavé de gouttes super-résolu comportant des gouttes représentatives d'une structure atomique d'une partie de l'échantillon observé met en œuvre une étape de segmentation (54) utilisant un algorithme d'apprentissage machine, entraîné pour classifier les données du pavé de gouttes super-résolu en deux classes, respectivement une classe de « fond » et une classe de « gouttes » permettant d'obtenir un pavé de gouttes segmenté.

6. Procédé selon l'une quelconque des revendications 1 à 5, dans lequel l'application d'une transformation (44) de super-résolution pour obtenir un pavé de gouttes super-résolu comportant des gouttes représentatives d'une structure atomique d'une partie de l'échantillon observé met en œuvre en outre un filtrage spectral spécial (56) appliqué sur le pavé de gouttes segmenté.

7. Procédé selon la revendication 6, dans lequel le filtrage spectral spécial (56) comporte une application (62) d'une transformée de Fourier du pavé de gouttes segmenté pour obtenir un diffractogramme du pavé de gouttes (TF1), une application (72) d'un masque de filtrage spectral spécifique (MFS) sur ledit diffractogramme et une application (74) d'une transformée de Fourier inverse.

8. Procédé selon la revendication 7, comportant un calcul (70) dudit masque de filtrage spectral spécifique (MFS) comportant : un calcul d'un diffractogramme théorique ajusté (DT*) normalisé entre 0 et 1 et une segmentation par apprentissage machine du diffractogramme du pavé de gouttes (TF1) permettant d'obtenir un diffractogramme du pavé de gouttes segmenté (TF1*), puis une normalisation entre 0 et 1 du diffractogramme du pavé de gouttes segmenté (TF1*), le masque de filtrage spectral spécifique étant formé à partir du maximum du diffractogramme théorique ajusté normalisé (DT*) et dudit diffractogramme du pavé de gouttes segmenté normalisé (TF1*).

9. Procédé selon l'une quelconque des revendications 1 à 8, comportant en outre, après l'étape d'alignement temporel (80), une étape de super-résolution temporelle (82), comportant un calcul d'un ou plusieurs pavés de gouttes intermédiaires.

10. Procédé selon l'une quelconque des revendications 1 à 9, dans lequel l'extraction (84) de centroïdes à partir des pavés de gouttes obtenus après alignement temporel met en œuvre un calcul, pour chacun desdits pavés de gouttes, et pour chaque goutte du pavé de gouttes, d'un centroïde de ladite goutte, et un suivi d'une position temporelle des centroïdes entre pavés de gouttes successifs.

11. Programme d'ordinateur comportant des instructions logicielles qui, lorsqu'elles sont exécutées par un dispositif électronique programmable, mettent en œuvre un procédé de traitement de données multidimensionnelles de microscopie conforme aux revendications 1 à 10.

12. Dispositif de traitement de données multidimensionnelles de microscopie pour cartographier des vibrations atomiques et/ou une température atomique dans un échantillon d'au moins un matériau, mettant en œuvre une acquisition d'au moins deux images dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le dispositif étant **caractérisé en ce qu'**il comporte :
- un module d'obtention d'une succession temporelle de pavés de données d'entrée,
- pour chaque pavé de données d'entrée de ladite succession, pour au moins un pavé de données extrait dudit pavé de données d'entrée, dit pavé de composante, comportant des données homogènes selon un critère d'homogénéité relatif à au moins un matériau de l'échantillon observé, un module (22) de transformation de super-résolution appliquée pavé de composante pour obtenir un pavé, dit pavé de gouttes super-résolu, comportant des gouttes représentatives d'une structure atomique d'une partie de l'échantillon observé,
- un module (24) d'alignement temporel des pavés de gouttes super-résolus de ladite succession temporelle,
- un module (28) extraction de centroïdes à partir desdits pavés de gouttes obtenus après alignement temporel,
- un module (30) de calcul d'une moyenne temporelle desdits centroïdes permettant d'obtenir une cartographie (34) de température atomique et/ou un module (32) de projection de vecteurs de déplacement desdits centroïdes permettant d'obtenir une cartographie (36) de vibrations atomiques.

## Patentansprüche

1. Computerimplementiertes Verfahren zur Verarbeitung multidimensionaler Mikroskopiedaten, um atomare Schwingungen und/oder eine atomare Temperatur in einer Probe aus mindestens einem Material zu kartieren, umfassend eine Erfassung von mindestens zwei Bildern der besagten Probe, die einen Eingangsdatenblock bilden, wobei das oder jedes Bild des besagten Eingangsdatenblocks repräsentativ für einen Teil der beobachteten Probe ist, wobei der besagte Eingangsdatenblock in einem Raum mit N Dimensionen dargestellt ist, wobei N größer oder gleich zwei ist, wobei jedes Datum des besagten Blocks einem Punkt des Raums mit N Dimensionen entspricht, wobei das Verfahren **dadurch gekennzeichnet ist, dass** es Schritte umfasst zum:
a) Erfassen (40) einer zeitlichen Abfolge von Eingangsdatenblöcken,
b) für jeden Eingangsdatenblock der besagten Abfolge, für mindestens einen Datenblock, der aus dem besagten Eingangsdatenblock extrahiert ist, genannt Komponentenblock, umfassend homogene Daten gemäß einem Homogenitätskriterium relativ zu mindestens einem Material der beobachteten Probe, Anwenden (44) einer Superauflösungstransformation auf den besagten Komponentenblock, um einen Block zu erhalten, genannt superaufgelöster Tropfenblock, umfassend Tropfen, die repräsentativ für eine atomare Struktur eines Teils der beobachteten Probe sind,
c) zeitlichen Ausrichten (80) der superaufgelösten Tropfenblöcke der besagten zeitlichen Abfolge,
d) Extrahieren von Zentroiden (84) aus den besagten Tropfenblöcken, die nach zeitlicher Ausrichtung erhalten werden,
e) Berechnen eines zeitlichen Mittels (86) der besagten Zentroide, ermöglichend, eine Kartierung der atomaren Temperatur zu erhalten, und/oder Projizieren (88) von Verschiebungsvektoren der besagten Zentroide, ermöglichend, eine Kartierung von atomaren Schwingungen zu erhalten.

2. Verfahren nach Anspruch 1, in dem die Anwendung (44) der Superauflösungstransformation (44) eine Faltung (46) durch einen Half-Ball-Savitzky-Golay-Filter (HBSG) mit quadratischem Kern einer Größe kleiner oder gleich dem Median der Abstände zwischen benachbarten Tropfen umfasst.

3. Verfahren nach Anspruch 2, in dem die Anwendung einer Superauflösungstransformation (44) ferner eine Erhöhung (48) der Anzahl von Punkten des Blocks mit N Dimensionen umfasst, der durch die besagte Superauflösungstransformation erhalten wird.

4. Verfahren nach Anspruch 3, in dem die Anwendung einer Superauflösungstransformation (44) ferner eine weitere Anwendung eines HBSG-Filters mit quadratischem Kern einer Größe kleiner oder gleich dem Median der Abstände zwischen benachbarten Tropfen nach Erhöhung (48) der Anzahl von Punkten und einen Schritt der lokalen Normalisierung (52) umfasst.

5. Verfahren nach einem beliebigen der Ansprüche 1 bis 4, in dem die Anwendung einer Transformation (44) der Superauflösung, um einen superaufgelösten Tropfenblock zu erhalten, umfassend Tropfen, die repräsentativ für eine atomare Struktur eines Teils der beobachteten Probe sind, einen Segmentierungsschritt (54) implementiert, der einen Maschinenlernalgorithmus verwendet, der trainiert ist, um die Daten des superaufgelösten Tropfenblocks in zwei Klassen zu klassifizieren, jeweils eine Klasse von "Hintergrund" und eine Klasse von "Tropfen", ermöglichend, einen segmentierten Tropfenblock zu erhalten.

6. Verfahren nach einem beliebigen der Ansprüche 1 bis 5, in dem die Anwendung einer Transformation (44) der Superauflösung, um einen superaufgelösten Tropfenblock zu erhalten, umfassend Tropfen, die repräsentativ für eine atomare Struktur eines Teils der beobachteten Probe sind, ferner eine spezielle spektrale Filterung (56) implementiert, die auf den segmentierten Tropfenblock angewendet wird.

7. Verfahren nach Anspruch 6, in dem die spezielle spektrale Filterung (56) eine Anwendung (62) einer Fourier-Transformierten des segmentierten Tropfenblocks umfasst, um ein Diffraktogramm des Tropfenblocks (TF1) zu erhalten, eine Anwendung (72) einer spezifischen Spektralfiltermaske (MFS) auf das besagte Diffraktogramm und eine Anwendung (74) einer inversen Fourier-Transformierten.

8. Verfahren nach Anspruch 7, umfassend eine Berechnung (70) der besagten spezifischen Spektralfiltermaske (MFS), umfassend: eine Berechnung eines angepassten theoretischen Diffraktogramms (DT*), normalisiert zwischen 0 und 1, und eine Segmentierung durch maschinelles Lernen des Diffraktogramms des Tropfenblocks (TF1), ermöglichend, ein Diffraktogramm des segmentierten Tropfenblocks (TF1*) zu erhalten, dann eine Normalisierung zwischen 0 und 1 des Diffraktogramms des segmentierten Tropfenblocks (TF1*), wobei die spezifische Spektralfiltermaske aus dem Maximum des angepassten normalisierten theoretischen Diffraktogramms (DT*) und des besagten Diffraktogramms des normalisierten segmentierten Tropfenblocks (TF1*) gebildet ist.

9. Verfahren nach einem beliebigen der Ansprüche 1 bis 8, ferner umfassend, nach dem Schritt der zeitlichen Ausrichtung (80), einen Schritt der zeitlichen Superauflösung (82), umfassend eine Berechnung eines oder mehrerer Zwischen-Tropfenblöcke.

10. Verfahren nach einem beliebigen der Ansprüche 1 bis 9, in dem die Extraktion (84) von Zentroiden aus den Tropfenblöcken, die nach zeitlicher Ausrichtung erhalten werden, eine Berechnung, für jeden der besagten Tropfenblöcke und für jeden Tropfen des Tropfenblocks, eines Zentroids des besagten Tropfens, und eine Verfolgung einer zeitlichen Position der Zentroide zwischen aufeinanderfolgenden Tropfenblöcken implementiert.

11. Computerprogramm, umfassend Softwareanweisungen, die, wenn sie durch eine programmierbare elektronische Vorrichtung ausgeführt werden, ein Verfahren zur Verarbeitung multidimensionaler Mikroskopiedaten gemäß den Ansprüchen 1 bis 10 implementieren.

12. Vorrichtung zur Verarbeitung multidimensionaler Mikroskopiedaten, um atomare Schwingungen und/oder eine atomare Temperatur in einer Probe aus mindestens einem Material zu kartieren, implementierend eine Erfassung von mindestens zwei Bildern der besagten Probe, die einen Eingangsdatenblock bilden, wobei das oder jedes Bild des besagten Eingangsdatenblocks repräsentativ für einen Teil der beobachteten Probe ist, wobei der besagte Eingangsdatenblock in einem Raum mit N Dimensionen dargestellt ist, wobei N größer oder gleich zwei ist, wobei jedes Datum des besagten Blocks einem Punkt des Raums mit N Dimensionen entspricht, wobei die Vorrichtung **dadurch gekennzeichnet ist, dass** sie umfasst:
- ein Modul zum Erhalten einer zeitlichen Abfolge von Eingangsdatenblöcken,
- für jeden Eingangsdatenblock der besagten Abfolge, für mindestens einen Datenblock, der aus dem besagten Eingangsdatenblock extrahiert ist, genannt Komponentenblock, umfassend homogene Daten gemäß einem Homogenitätskriterium relativ zu mindestens einem Material der beobachteten Probe, ein Modul (22) zur Superauflösungstransformation, angewendet auf den Komponentenblock, um einen Block zu erhalten, genannt superaufgelöster Tropfenblock, umfassend Tropfen, die repräsentativ für eine atomare Struktur eines Teils der beobachteten Probe sind,
- ein Modul (24) zur zeitlichen Ausrichtung der superaufgelösten Tropfenblöcke der besagten zeitlichen Abfolge,
- ein Modul (28) zur Extraktion von Zentroiden aus den besagten Tropfenblöcken, die nach zeitlicher Ausrichtung erhalten werden,
- ein Modul (30) zur Berechnung eines zeitlichen Mittels der besagten Zentroide, ermöglichend, eine Kartierung (34) der atomaren Temperatur zu erhalten, und/oder ein Modul (32) zur Projektion von Verschiebungsvektoren der besagten Zentroide, ermöglichend, eine Kartierung (36) von atomaren Schwingungen zu erhalten.

## Claims

1. Computer-implemented method for processing multidimensional microscopy data for mapping atomic vibrations and/or an atomic temperature in a sample of at least one material, comprising an acquisition of at least two images of said sample forming an input data block, the or each image of said input data block being representative of a portion of the observed sample, said input data block being represented in an N-dimensional space, N being greater than or equal to two, each datum of said block corresponding to a point of the N-dimensional space, the method being **characterized in that** it comprises steps of:
a) acquisition (40) of a temporal succession of input data blocks,
b) for each input data block of said succession, for at least one data block extracted from said input data block, called component block, comprising homogeneous data according to a homogeneity criterion relating to at least one material of the observed sample, application (44) of a super-resolution transformation to said component block to obtain a block, called super-resolved droplet block, comprising droplets representative of an atomic structure of a portion of the observed sample,
c) temporal alignment (80) of the super-resolved droplet blocks of said temporal succession,
d) extraction of centroids (84) from said droplet blocks obtained after temporal alignment,
e) calculation of a temporal average (86) of said centroids allowing to obtain a mapping of atomic temperature and/or projection (88) of displacement vectors of said centroids allowing to obtain a mapping of atomic vibrations.

2. Method according to claim 1, in which the application (44) of the super-resolution transformation (44) comprises a convolution (46) by a Half-Ball Savitzky-Golay (HBSG) filter with a square kernel of size less than or equal to the median of the distances between neighboring droplets.

3. Method according to claim 2, in which the application of a super-resolution transformation (44) further comprises an increase (48) in the number of points of the N-dimensional block obtained by said super-resolution transformation.

4. Method according to claim 3, in which the application of a super-resolution transformation (44) further comprises another application of an HBSG filter with a square kernel of size less than or equal to the median of the distances between neighboring droplets after increasing (48) the number of points and a step of local normalization (52).

5. Method according to any one of claims 1 to 4, in which the application of a transformation (44) for super-resolution to obtain a super-resolved droplet block comprising droplets representative of an atomic structure of a portion of the observed sample implements a segmentation step (54) using a machine learning algorithm, trained to classify the data of the super-resolved droplet block into two classes, respectively a "background" class and a "droplets" class allowing to obtain a segmented droplet block.

6. Method according to any one of claims 1 to 5, in which the application of a transformation (44) for super-resolution to obtain a super-resolved droplet block comprising droplets representative of an atomic structure of a portion of the observed sample further implements a special spectral filtering (56) applied on the segmented droplet block.

7. Method according to claim 6, in which the special spectral filtering (56) comprises an application (62) of a Fourier transform of the segmented droplet block to obtain a diffractogram of the droplet block (TF1), an application (72) of a specific spectral filtering mask (MFS) on said diffractogram and an application (74) of an inverse Fourier transform.

8. Method according to claim 7, comprising a calculation (70) of said specific spectral filtering mask (MFS) comprising: a calculation of an adjusted theoretical diffractogram (DT*) normalized between 0 and 1 and a segmentation by machine learning of the diffractogram of the droplet block (TF1) allowing to obtain a diffractogram of the segmented droplet block (TF1*), then a normalization between 0 and 1 of the diffractogram of the segmented droplet block (TF1*), the specific spectral filtering mask being formed from the maximum of the normalized adjusted theoretical diffractogram (DT*) and of said diffractogram of the normalized segmented droplet block (TF1*).

9. Method according to any one of claims 1 to 8, further comprising, after the temporal alignment step (80), a temporal super-resolution step (82), comprising a calculation of one or more intermediate droplet blocks.

10. Method according to any one of claims 1 to 9, in which the extraction (84) of centroids from the droplet blocks obtained after temporal alignment implements a calculation, for each of said droplet blocks, and for each droplet of the droplet block, of a centroid of said droplet, and a tracking of a temporal position of the centroids between successive droplet blocks.

11. Computer program comprising software instructions which, when they are executed by a programmable electronic device, implement a method for processing multidimensional microscopy data in accordance with claims 1 to 10.

12. Device for processing multidimensional microscopy data for mapping atomic vibrations and/or an atomic temperature in a sample of at least one material, implementing an acquisition of at least two images of said sample forming an input data block, the or each image of said input data block being representative of a portion of the observed sample, said input data block being represented in an N-dimensional space, N being greater than or equal to two, each datum of said block corresponding to a point of the N-dimensional space, the device being **characterized in that** it comprises:
- a module for obtaining a temporal succession of input data blocks,
- for each input data block of said succession, for at least one data block extracted from said input data block, called component block, comprising homogeneous data according to a homogeneity criterion relating to at least one material of the observed sample, a module (22) for super-resolution transformation applied to the component block to obtain a block, called super-resolved droplet block, comprising droplets representative of an atomic structure of a portion of the observed sample,
- a module (24) for temporal alignment of the super-resolved droplet blocks of said temporal succession,
- a module (28) of extraction of centroids from said droplet blocks obtained after temporal alignment,
- a module (30) for calculating a temporal average of said centroids allowing to obtain a mapping (34) of atomic temperature and/or a module (32) for projecting displacement vectors of said centroids allowing to obtain a mapping (36) of atomic vibrations.
